# EUROPÄISCHE PATENTSCHRIFT

(11) **EP 1 647 483 B1**
(45) Veröffentlichungstag und Bekanntmachung des Hinweises auf die Patenterteilung: **20.06.2007**
(21) Anmeldenummer: 05022258.7
(22) Anmeldetag: 12.10.2005
(51) Int. Cl.: B64D 11/06

(54) **Passagiersitz mit einem Fach für einen Gegenstand**
Passenger seat with a compartment for an object
Siège pour passager avec un compartiment pour un objet

(30) Priorität: 14.10.2004 DE 102004050082; 14.10.2004 US 618623 P
(43) Veröffentlichungstag der Anmeldung: 19.04.2006
(73) Patentinhaber: Airbus Deutschland GmbH, 21129 Hamburg (DE)
(72) Erfinder: Schröder, Jan, 22559 Hamburg (DE); Granzeier, Werner, 21635 Jork (DE); Wietzke, Andreas, 22419 Hamburg (DE)
(74) Vertreter: Dilg, Andreas

(56) Entgegenhaltungen:
- EP-A- 0 348 130
- EP-A- 0 980 790
- EP-A- 1 371 555
- DE-A1- 2 034 103
- DE-U1-9202004 008 06
- US-A- 5 816 650
- US-A- 6 161 896
- US-A1- 2003 222 174
- US-B1- 6 419 313
- US-B1- 6 588 839

## Beschreibung

Die vorliegende Erfindung betrifft einen Sitz. Insbesondere betrifft die vorliegende Erfindung einen Passagiersitz, eine Passagiersitzgruppe und ein Flugzeug mit einem entsprechenden Passagiersitz oder mit einer entsprechenden Passagiersitzgruppe.

Die Passagiersitze in Verkehrsmitteln sind wichtige Schutzeinrichtungen in Gefahrensituationen und Komfortfaktoren für die Unterbringung der Reisenden. Speziell in Verkehrsflugzeugen kommt der Unterbringung des Handgepäcks der Reisenden große Bedeutung zu. Auf kurzen und mittleren Strecken wollen viele Passagiere das Gepäck nicht zur Beförderung aufgeben, um beim Ein- und Aussteigen die Wartezeit und Gepäckverlust zu vermeiden. Auf Langstreckenflügen werden vermehrt persönliche Gegenstände für Arbeit und Unterhaltung oder zur persönlichen Versorgung benötigt, außerdem wird sehr häufig ein kompletter Satz Bekleidung wegen der meist abweichenden klimatischen Bedingungen am Zielort von den Reisenden griffbereit gewünscht. Es ist also wichtig, dass ein Passagier auch während eines Fluges Zugriff zu seinen persönlichen Gegenständen hat.

Um den Passagieren mehr Freiraum zu gewähren, wurden Ablagefächer für das Handgepäck über den Sitzen geschaffen, die auch Oberbekleidung aufnehmen können. Diese Gepäckablagen stellen zusätzliche Risiken dar, wenn bei einem Flugzeugunfall die strukturelle Integrität der Gepäckfächer versagt. Durch die Position über den Köpfen der Passagiere werden diese durch herunterfallende Gepäckstücke oder durch die Gepäckfächer selbst gefährdet. Zudem können auch die Fluchtwege durch heruntergefallene Bruchstücke oder Gepäckstücke beeinträchtigt oder blockiert werden. Diese Risiken werden noch beträchtlich größer, wenn die Gepäckfächer missbräuchlich überladen werden. In vielen Teilen der Welt ist es nahezu üblich, gerade die Gepäckstücke in die Passagierkabine zu bringen und in den Hatracks zu verstauen, die z. B. wegen Gewicht, Inhalt, persönlicher Bedeutung usw. nicht aufgegeben werden können.

Die Gepäckfächer über den Sitzen engen den Raum im Deckenbereich der Passagierkabine ein, im Flugzeug wird der unerwünschte "Tunneleffekt" noch verstärkt. Außerdem wird der Zeitbedarf für das Ein- und Aussteigen verlängert, weil das Be- und Entladen der Gepäckfächer praktisch nur von den Längsgängen der Passagierkabine aus erfolgt, die dann weitgehend blockiert sind.

Es sind alternative Unterbringungsmöglichkeiten zu den Hatracks gefragt, in die der Passagier sein Handgepäck oder Teile davon unterbringen kann.

Passagiersitze mit Hohlräumen für Objekte sind beispielsweise aus US-A-5 816 650, US 2003/0222174 A1, US-B1-6 419 313 und DE-U1-202004008069 bekannt.

Es ist eine Aufgabe der Erfindung, eine bessere und sicherere Unterbringungsmöglichkeit anzugeben.

Gemäß einem Ausführungsbeispiel der vorliegenden Erfindung, wie in Anspruch 1 angegeben, kann die obige Aufgabe mittels eines Passagiersitzes gelöst werden, der eine Unterbaukonstruktion, eine Sitzfläche und eine Rückenlehne aufweist. Die Unterbaukonstruktion weist einen ersten Hohlraum auf, wobei der erste Hohlraum ausgestaltet ist, ein Objekt aufzunehmen. Beispielsweise kann dieser Hohlraum ein Gepäckstück aufnehmen. Die Sitzfläche ist auf der Unterbaukonstruktion derart angeordnet, dass sie in einen Betriebszustand bringbar ist, so dass der erste Hohlraum zugänglich ist. In anderen Worten: die Sitzfläche verdeckt normalerweise den Hohlraum. Durch eine Veränderung der Lage der Sitzfläche kann jedoch der Hohlraum freigegeben werden, um das Objekt in den ersten Hohlraum einzubringen oder das Objekt aus dem ersten Hohlraum zu entfernen. Die Rückenlehne weist eine erste Hinterseite auf und die Unterbaukonstruktion weist eine zweite Hinterseite auf, wobei die erste Hinterseite rückwärtig mit der zweiten Hinterseite abschließt oder über die zweite Hinterseite herausragt. Darüber hinaus weist die zweite Hinterseite eine Aussparung auf, und die Unterbaukonstruktion verjüngt sich in einem Fußbodenbereich, um zusätzliche Beinfreiheit zu schaffen.

In vorteilhafter Art und Weise ermöglicht dies, einen Passagiersitz bereitzustellen, der bei einer zusätzlichen Funktion ― der Aufnahme eines Objektes ― kein im Wesentlichen höheres Gewicht aufweisen muss. Dadurch ist es beispielsweise möglich, Gepäckstücke, insbesondere Handgepäckstücke, in dem Passagiersitz unterzubringen. Vorteilhaft kann die Sitzfläche den ersten Hohlraum abdecken. Somit können gleichsam Objekte, die in dem ersten Hohlraum aufbewahrt werden gegen ein Abheben geschützt werden. Dieser Schutz könnte beispielsweise beim Durchfliegen von Turbulenzen zum Tragen kommen.

Der erste Hohlraum kann beispielsweise auch als individuelles Passagier-Electronic-Compartment verwendet werden. Darin können beispielsweise individuell für einzelne Passagiere Steckdosen oder Anschlüsse für Kopfhörer und tragbare Computer untergebracht sein. Bei einem Passagiersitz gemäß der vorliegenden Erfindung können bekannte Details, wie beispielsweise klappbare Armlehnen, Klapptische, Gepäcktaschen, Sicherheitsgurte oder Entertainmentsysteme beibehalten werden.

Der erste Hohlraum kann es darüber hinaus ermöglichen, dass die Sitzfläche vergrößert werden kann und beispielsweise zur Aufnahme einer Schwimmweste bei Überwasserflügen dienen kann. Es kann somit die Höhe der Sitzfläche vergrößert werden, ohne eine Veränderung der Sitzhöhe für einen Passagier zu bewirken, indem ein Teil des ersten Hohlraums für die Unterbringung der zusätzlichen Höhe der Sitzfläche benutzt wird.

Das Abschließen bzw. Überragen der ersten Hinterseite gegenüber der zweiten Hinterseite kann es ermöglichen, dass ein rückwärtiger Passagier eine erhöhte Beinfreiheit hat.

Gemäß einem weiteren Ausführungsbeispiel der vorliegenden Erfindung, wie in Anspruch 2 angegeben, kann die Unterbaukonstruktion ausgebildet sein, die Last der Sitzfläche aufzunehmen.

Vorteilhaft kann dadurch allein durch die Unterbaukonstruktion die Last der Sitzfläche aufgenommen werden. Die Unterbaukonstruktion kann derart ausgebildet sein, dass sie auf in Flugzeugen üblichen Sitzschienen oder ähnlichen Befestigungen angebracht werden kann. Es sind damit keine zusätzlichen Komponenten nötig, die eine Stützfunktion der Sitzfläche übernehmen.

Gemäß einem weiteren Ausführungsbeispiel der vorliegenden Erfindung, wie in Anspruch 3 angegeben, ist der erste Hohlraum ausgebildet, ein Normgepäckstück aufzunehmen. Vorteilhaft kann somit ein Fach für einen standardisierten Koffer, beispielsweise einen standardisierten Airlinekoffer, angeboten werden. Der Airlinekoffer kann derart ausgestaltet sein, dass er in den ersten Hohlraum passt. Ein Fahrgast kann dadurch leichter sein Handgepäck planen.

Vorteilhaft ermöglicht eine Unterbringung von Handgepäck in einem ersten Hohlraum in einem Passagiersitz, dass für Handgepäck beispielsweise weniger anderer Stauraum, wie beispielsweise in Hatracks, vorgesehen werden muss. Somit können beispielsweise Vorgaben, wie ein IATA Standard Volumen erreicht werden, obwohl weniger Gepäck über den Köpfen von Passagieren untergebracht werden muss. Daher können sicherere Interior-Konzeptionen gemacht werden und die Unfallsicherheit kann erhöht werden. Ein möglicher Verzicht auf beispielsweise Hatracks kann es Konstrukteuren ermöglichen, den Passagierraum mit geänderten Zellkonstruktionen auszugestalten. Dadurch können beispielsweise effektivere Leichtbaukomponenten für obere Kabinenteile eines Verkehrsmittels oder Flugzeuges eingesetzt werden. Vorteilhaft kann somit das Gewicht eines Flugzeuges reduziert werden.

Gemäß einem weiteren Ausführungsbeispiel der vorliegenden Erfindung, wie in Anspruch 4 angegeben, weist der Passagiersitz eine Verschlussvorrichtung auf, mittels welcher der erste Hohlraum verschließbar ist. Beispielsweise kann in der Sitzfläche oder in der Unterbaukonstruktion ein Schloss untergebracht sein, das ausgestaltet ist, die Sitzfläche fest mit der Unterbaukonstruktion zu verbinden. Ein Passagier kann somit bestimmen, wann der erste Hohlraum zugänglich bzw. verschlossen ist. Ein Schloss zum Verschließen des ersten Hohlraums kann beispielsweise als Codeschloss oder als Kartenschloss (Ticketkarte) ausgebildet sein. Mittels eines Schlosses kann in vorteilhafter Art und Weise ein unbefugter Zugang zu dem ersten Hohlraum bei Abwesenheit eines Passagiers verhindert werden.

Gemäß einem weiteren Ausführungsbeispiel der vorliegenden Erfindung, wie in Anspruch 5 angegeben, ist die Unterbaukonstruktion als Rahmenkonstruktion ausgebildet.

Vorteilhaft ermöglicht die Rahmenkonstruktion eine erhöhte Stabilität der Unterbaukonstruktion. Dadurch kann ein crashsicherer Aufbau des ersten Hohlraums ermöglicht werden. In anderen Worten: ein Objekt, das beispielsweise in dem ersten Hohlraum untergebracht ist, kann gegen ein Lösen bei einem Unfall gesichert werden. Weiter kann es die Ausgestaltung der Unterbaukonstruktion als Rahmenkonstruktion vorteilhaft ermöglichen, einen Textilbehälter, beispielsweise eine hängbare Tragetasche oder einen weichen Beutel, aufzunehmen. Die weichen Behälter können von der Rahmenkonstruktion getragen werden. Somit kann eine Möglichkeit geschaffen werden, beispielsweise Abfall oder schmutzige Wäsche zu sammeln.

Beispielsweise kann durch die Ausgestaltung der Unterbaukonstruktion als Rahmenkonstruktion ein Teil des Gewichtes des Passagiersitzes eingespart werden. Die Unterbaukonstruktion muss nicht in massiver Vollbauweise ausgestaltet werden, sondern kann Öffnungen aufweisen, in denen Material entfernt wurde. Der Aufbau als Tragwerk kann trotzdem eine ausreichende Stabilität liefern.

Gemäß einem weiteren Ausführungsbeispiel der vorliegenden Erfindung, wie in Anspruch 6 angegeben, weist die Unterbaukonstruktion einen oberen Bereich und einen unteren Bereich auf. Der obere Bereich weist einen größeren Abstand von einem Kabinenboden auf als der untere Bereich. Der untere Bereich kann der Befestigung mit dem Kabinenboden dienen und die Befestigung kann beispielsweise mittels einer Sitzschiene erfolgen. Von dem oberen Bereich zu dem unteren Bereich verjüngt sich die Unterbaukonstruktion.

Ein Sitzschienensystem in einem Flugzeug kann eine Verstellung des Abstandes zwischen einem ersten und einem zweiten Passagiersitz in Sprüngen von 25,4 mm erlauben. Ein üblicher Sitzabstand in einer Economy Class Bestuhlung in Flugzeugen beträgt 787,4 mm (31 "). Wegen der erfindungsgemäßen Anordnung eines ersten Hohlraumes oder Gepäckfaches unter der Sitzfläche und Berücksichtigung eines Fußraums ist es selbst groß gewachsenen Menschen möglich mit ausreichend Bein- und Fußfreiheit zu sitzen und den ersten Hohlraum zu be- und entladen. In anderen Worten: die Unterbaukonstruktion verjüngt sich in die Richtung eines Fußbereichs. Dabei ist der Fußbereich der Bereich, an dem der Passagiersitz mit einem Sitzschienensystem verbunden ist.

So ist es zum Beispiel einem 95 Perzentil großen US Amerikaner ergonomisch möglich den Hohlraum mit Gepäck zu bestücken und mit ausreichendem Komfort zu sitzen. Dadurch kann es den Flugzeuggesellschaften ermöglicht werden den üblichen engen Sitzabstand und damit eine hohe Passagieranzahl in der Flugzeugkabine mit dem erfindungsgemäßen Passagiersitz beizubehalten. Die Wirtschaftlichkeit einer dichten Bestuhlung in einem Verkehrsmittel bleibt somit gewahrt.

Gemäß einem weiteren Ausführungsbeispiel der vorliegenden Erfindung, wie in Anspruch 7 angegeben, ist die Unterbaukonstruktion zumindest teilweise aus einem transparenten Werkstoff hergestellt.

Vorteilhaft kann es eine zumindest teilweise Herstellung oder Verkleidung der Unterbaukonstruktion, insbesondere wenn die Unterbaukonstruktion als Rahmenkonstruktion ausgebildet ist, ermöglichen, Inhalte, die in einem ersten Hohlraum untergebracht sind, von außen erkennbar zu machen. Dadurch wird vorteilhaft eine Sichtkontrolle der in einem ersten Hohlraum eines Passagiersitzes untergebrachten Objekte ermöglicht.

Gemäß einem weiteren Ausführungsbeispiel der vorliegenden Erfindung, wie in Anspruch 8 angegeben, ist die Unterbaukonstruktion zumindest teilweise aus einem undurchsichtigen Werkstoff hergestellt.

In vorteilhafter Art und Weise verhindert eine zumindest teilweise Herstellung oder Verkleidung der Unterbaukonstruktion, insbesondere wenn die Unterbaukonstruktion als Rahmenkonstruktion ausgebildet ist, die ungewollte Einsichtnahme in den ersten Hohlraum. Durch den Einsatz spezieller Werkstoffe für die Verkleidung, wie beispielsweise Aluminium, Polycarbonat oder CFK / GFK, kann es ermöglicht werden, dass der erste Hohlraum crashsicher geschlossen wird. Diese Werkstoffe sind in der Lage hohe Stoßkräfte, wie sie beispielsweise bei einem Unfall auftreten können, aufzunehmen. Dadurch kann ein Lösen eines Objektes aus einem ersten Hohlraum verhindert werden.

Gemäß einem weiteren Ausführungsbeispiel der vorliegenden Erfindung, wie in Anspruch 9 angegeben, ist die Unterbaukonstruktion zumindest teilweise aus einer offenen Netzstruktur hergestellt.

Vorteilhaft kann die zumindest teilweise Herstellung oder Verkleidung der Unterbaukonstruktion mit einer offenen Netzstruktur, insbesondere wenn die Unterbaukonstruktion als Rahmenkonstruktion ausgebildet ist, ermöglichen, dass der erste Hohlraum zur Aufnahme von beispielsweise Kleidung oder Taschen ausgestaltet ist. Somit kann eine kostengünstige und sehr leichte Rückhaltevorrichtung in der Unterbaukonstruktion geschaffen werden. Da Schmutzpartikel durch die Netzmaschen fallen ist keine extra Aufwendung für eine Reinigung des Hohlraums zu erwarten.

Gemäß einem weiteren Ausführungsbeispiel der vorliegenden Erfindung, wie in Anspruch 10 angegeben, kann die Unterbaukonstruktion eine mit zumindest einem Loch versehene Bodenfläche aufweisen. Diese perforierte Bodenfläche kann als Bodenfläche des ersten Hohlraums ausgebildet sein. In vorteilhafter Art und Weise kann somit eine Reinigung des Hohlraums oder eine Entfernung von Kleinteilen aus dem Hohlraum erleichtert werden. Kleinteile, die in dem ersten Hohlraum zurückgeblieben sind, können über die perforierte Bodenfläche oder ein siebartiges Material auf den Boden des Flugzeuges gebracht werden. Von dem Boden des Flugzeuges können sie leicht, beispielsweise im Rahmen von üblichen Putzaktivitäten, entfernt werden.

Gemäß einem weiteren Ausführungsbeispiel der vorliegenden Erfindung, wie in Anspruch 11 angegeben, weist die Unterbaukonstruktion mindestens einen zweiten Hohlraum auf, der von dem ersten Hohlraum abgetrennt ist.

In vorteilhafter Art und Weise ist es somit möglich, in der Unterbaukonstruktion Fächer vorzusehen, in denen Objekte untergebracht werden können. Beispielsweise könnte in dem zweiten Hohlraum ein Schuhfach vorgesehen sein, zur Unterbringung der Schuhe eines rückwärtigen Passagiers. Darüber hinaus könnten Fächer für die Ablage von Zeitschriften oder Laptops beispielsweise geschaffen werden.

Gemäß einem weiteren Ausführungsbeispiel der vorliegenden Erfindung, wie in Anspruch 12 angegeben, könnte der zumindest eine zweite Hohlraum von einer rückwärtigen Position der Unterbaukonstruktion zugänglich sein. Vorteilhaft kann es somit ermöglicht werden, dass ein rückwärtiger Passagier den zumindest einen zweiten Hohlraum bedienen kann.

Gemäß einem weiteren Ausführungsbeispiel der vorliegenden Erfindung, wie in Anspruch 13 angegeben, weist der erste Hohlraum eine Beleuchtungseinrichtung auf. In vorteilhafter Art und Weise kann durch die Beleuchtungseinrichtung zum Beleuchten des Hohlraumes die Bedienung des Hohlraumes vereinfacht werden.

Gemäß einem weiteren Ausführungsbeispiel der vorliegenden Erfindung, wie in Anspruch 14 angegeben, ist in dem ersten Hohlraum eine Körpermassagefunktionseinheit ausgebildet. In vorteilhafter Art und Weise kann somit insbesondere bei Langstreckenflügen der Komfort für Passagiere erhöht werden. Körperteile und Muskelpartien des Passagiers können zur Entspannung massiert werden.

Gemäß einem weiteren Ausführungsbeispiel der vorliegenden Erfindung, wie in Anspruch 15, angegeben, ist in dem ersten Hohlraum eine Beduftungsfunktionseinheit ausgebildet. Durch den Einsatz einer Beduftungsfunktionseinheit kann in vorteilhafter Art und Weise das Wohlbefinden für Passagiere gesteigert werden, indem von der Beduftungsfunktionseinheit Geruchstoffe verteilt werden.

Gemäß einem weiteren Ausführungsbeispiel der vorliegenden Erfindung, wie in Anspruch 16 angegeben, ist in dem ersten Hohlraum eine Beinstütze ausgebildet. In vorteilhafter Art und Weise kann die Beinstütze für eine Ruhe- oder Schlafposition aus dem Hohlraum herausgefahren werden. Somit kann einem Reisenden während eines Fluges mehr Komfort geboten werden. Wird die Beinstütze nicht benutzt, kann sie in dem Hohlraum untergebracht werden, ohne den Passagier zu stören.

Gemäß einem weiteren Ausführungsbeispiel der vorliegenden Erfindung, wie in Anspruch 17 angegeben, ist die Sitzfläche derart ausgestaltet, dass sie als Tischfläche nutzbar ist. In vorteilhafter Art und Weise kann bei einem unbesetzten Passagiersitz die Sitzfläche des unbesetzten Passagiersitzes für einen anderen Passagier als Tisch oder Arbeitsfläche dienen. Es kann sein, dass die Sitzfläche eine bepolsterte erste Oberseite und eine harte erste Unterseite aufweist. Mittels eines Klappmechanismus kann es möglich sein, die Sitzfläche umzudrehen, so dass die erste Oberseite zur zweiten Unterseite und die erste Unterseite zur zweiten Oberseite wird. Vorteilhaft kann dabei der erste Hohlraum die bepolsterte erste Oberseite aufnehmen. Dadurch kann eine im Wesentlichen ebene zweite Oberfläche ermöglicht werden.

Gemäß einem weiteren Ausführungsbeispiel der vorliegenden Erfindung, wie in Anspruch 18 angegeben, wird eine Passagiersitzgruppe angegeben. Die Passagiersitzgruppe umfasst eine Mehrzahl von Passagiersitzen. In vorteilhafter Art und Weise kann damit die Unterbringung von Handgepäck beispielsweise in den Sitzen ermöglicht werden und es kann auf über den Köpfen der Passagiere montierte Gepäckfächer verzichtet werden.

Gemäß einem weiteren Ausführungsbeispiel der vorliegenden Erfindung, wie in Anspruch 19 angegeben, wird eine Passagiersitzgruppe angegeben, die auf einer Sitzmontagevorrichtung montierbar ist. Vorteilhaft kann bei der Montage der Passagiersitzgruppe auf einer Sitzmontagevorrichtung ein aufwendiger Umbau an einer Fußbodenstruktur oder einer Sitzschiene vermieden werden. Oft werden beispielsweise in Flugzeugen standardisierte Sitzschienensysteme zum Einbau von Passagiersitzen oder Passagiersitzgruppen eingesetzt. Diese Sitzschienen können eine flexible Montage der Passagiersitze oder Passagiersitzgruppen ermöglichen.

Gemäß einem weiteren Ausführungsbeispiel der vorliegenden Erfindung, wie in Anspruch 20 angegeben, weist die Mehrzahl von Passagiersitzen einen ersten und einen zweiten Passagiersitz auf, wobei der zweite Passagiersitz hinter dem ersten Passagiersitz angeordnet ist. In vorteilhafter Art und Weise kann somit beispielsweise die Länge einer Flugzeugkabine bei der Anordnung der Passagiersitze ausgenützt werden.

Weitere vorteilhafte Ausführungsbeispiele der Passagiersitzgruppe gemäß der vorliegenden Erfindung sind in den Ansprüchen 21 bis 22 angegeben.

Gemäß einem weiteren vorteilhaften Ausführungsbeispiel der vorliegenden Erfindung, wie in Anspruch 23 angegeben, ist ein Flugzeug angegeben, das einen Passagiersitz oder eine Passagiersitzgruppe gemäß der vorliegenden Erfindung aufweist. In vorteilhafter Art und Weise kann ein solches Flugzeug ein Standard Volumen für Gepäck, beispielsweise ein IATA Standard Volumen, aufweisen, wobei das Gepäck in den Passagiersitzen untergebracht werden kann. Es kann beispielsweise auf Gepäckablagen über den Köpfen der Passagiere in sog. Hatracks verzichtet werden.

Im Folgenden werden vorteilhafte Ausführungsbeispiele der vorliegenden Erfindung mit Verweis auf die folgenden Figuren beschrieben.

Fig. 1 zeigt eine schematisierte dreidimensionale Seitenansicht einer Double Seat Passagiersitzgruppe gemäß der vorliegenden Erfindung.

Fig. 2 zeigt eine weitere schematisierte dreidimensionale Seitenansicht einer Double Seat Passagiersitzgruppe gemäß der vorliegenden Erfindung.

Fig. 3 zeigt eine schematisierte dreidimensionale Rückenansicht einer Double Seat Passagiersitzgruppe gemäß der vorliegenden Erfindung.

Fig. 4 zeigt eine schematisierte dreidimensionale Ansicht einer Passagiersitzgruppe von zwei Double Seat Sitzreihen.

In der folgenden Beschreibung werden für gleiche oder sich entsprechende Elemente die gleichen Bezugsziffern verwendet.

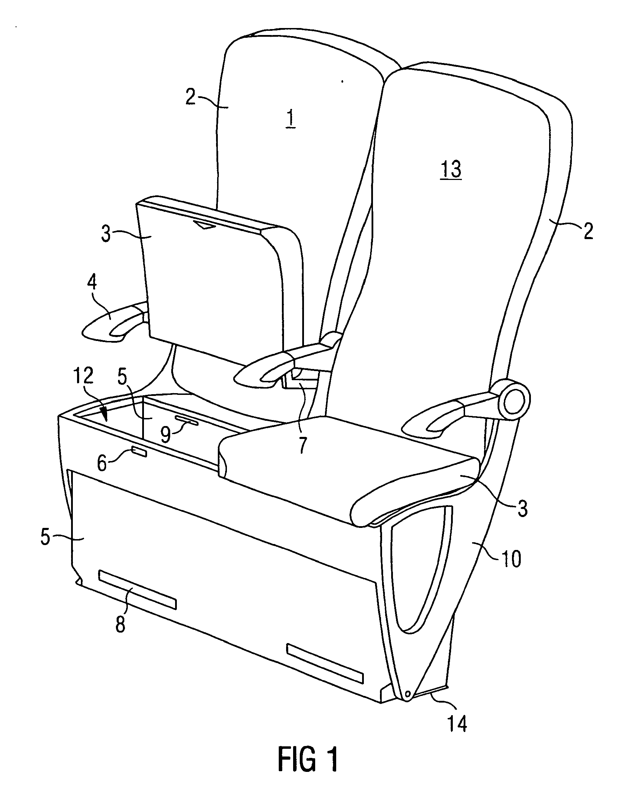

Fig. 1 zeigt eine schematisierte dreidimensionale Seitenansicht einer Double Seat Passagiersitzgruppe gemäß der vorliegenden Erfindung. Die Figur zeigt zwei Passagiersitze 1 und 13, die zu einer Passagiersitzgruppe in Double Seat Bauweise angeordnet sind. Dabei werden die beiden Passagiersitze 1, 13 nebeneinander angeordnet. Neben der Anordnung als Double Seat ist eine Anordnung als Single Seat (einzelner Passagiersitz) oder Tripple Seat, bei der drei einzelne Passagiersitze kombiniert sind, und weitere Anordnungen (vier oder mehr Sitze nebeneinander) denkbar. Diese Anordnungen können in einem Fahrzeug oder Flugzeug hintereinander als sog. forward Anordnungen angeordnet sein. Dabei sind die Passagiersitzgruppen gleichgerichtet hintereinander angeordnet. Im Gegensatz dazu werden die Sitze bei einer aft back Anordnung derart angebracht, dass sich Personen, die sich auf den Sitzen befinden, gegenüber sitzen bzw. Rücken an Rücken sitzen. Weitere Sitzstrukturen sind VIP Sitze, die sich durch ihre Größe auszeichnen und Swivel Sitze, die drehbar gelagert sind.

In Fig. 1 zu sehen ist eine Unterbaukonstruktion 10, die als Rahmenkonstruktion ausgebildet ist. Die Unterbaukonstruktion 10 weist einen Fußbereich 14 auf, mit dem sie an im Flugzeugbau üblichen Sitzschienen montiert werden kann. Die Unterbaukonstruktion 10 bildet einen Hohlraum 12 aus. Dieser Hohlraum 12 kann mehrere Aufgaben erfüllen. Es ist möglich, in dem Hohlraum 12 Objekte, wie beispielsweise Handgepäck, unterzubringen. Der Hohlraum 12 kann derart gestaltet sein, um ein Normgepäckstück, beispielsweise einen Airlinekoffer, aufzunehmen. Sowohl Passagiersitz 1 als auch Passagiersitz 13 können einen Hohlraum 12 aufweisen. Die beiden Hohlräume 12 können zu einem gemeinsamen Hohlraum 12 verbunden sein oder durch eine Abtrennung unterschiedlich große Hohlräume definieren.

Neben der Unterbringung von Gepäck in dem Hohlraum 12 kann Hohlraum 12 dazu dienen, weitere Komfortbauteile aufzunehmen. Beispielsweise können in Hohlraum 12 Kühlgeräte 8 (z. B. Peltierelement) vorgesehen sein. Der Hohlraum 12 kann somit für die Aufbewahrung von Lebensmitteln und Getränken, wie z. B. einer Menübox, verwendet werden. Darüber hinaus kann der Hohlraum 12 eine Körpermassagefunktionseinheit, eine Beduftungsfunktionseinheit oder eine Beinstütze unterbringen.

Die Unterbaukonstruktion 10 kann mit einer Verkleidung 5 verkleidet sein. Beispielsweise kann die Verkleidung 5 ein transparenter Werkstoff, beispielsweise Acrylglas sein. Durch die transparente Verkleidung wird der Hohlraum 12 einsehbar. Die Verkleidung 5 verhindert ein Herausfallen des Handgepäcks und sichert dieses bei Turbulenzen, harten Landungen und sogar Unfällen. Die Verkleidung 5 füllt somit Lücken der Unterbaukonstruktion 10, die bei einem rahmenförmigen oder tragwerkförmigen Aufbau der Unterbaukonstruktion 10 entstehen. Die Verkleidung 5 kann beispielsweise auch aus undurchsichtigem Material, wie Aluminium, Polycarbonat, GFK oder CFK, beschaffen sein. Dadurch wird ein ungewollter Einblick in den Hohlraum 12 verhindert. Des weiteren kann die Unterbaukonstruktion 10 als Verkleidung 5 eine offene Netzstruktur aufweisen. Damit kann der Hohlraum 12 zur Ablage von beispielsweise Wäsche verwendet werden. Die Verkleidung 5 kann teilweise tragende Funktionen der Unterbaukonstruktion 10 übernehmen.

Die Unterbaukonstruktion 10 dient der Anbringung bekannter Sitzfunktionen, wie Armlehnen 4 oder z. B. Sicherheitsgurten und Klapptischen. Darüber hinaus sind an der Unterbaukonstruktion 10 die Sitzfläche 3 und die Rückenlehne 2 angebracht. Zur Anbringung der Sitzfläche 3 ist ein Klappgelenk 7 vorgesehen. Dieses Klappgelenk 7 ermöglicht es, die Position der Sitzfläche 3 zu variieren. Die Sitzfläche ist dadurch in einen Betriebszustand bringbar, so dass der Hohlraum 12 zugänglich ist. In diesem Zustand können Objekte in den Hohlraum 12 eingeführt bzw. aus diesem entfernt werden. In einem zweiten Betriebszustand, wie bei Passagiersitz 13 gezeigt, liegt die Sitzfläche 3 auf der Unterbaukonstruktion auf und verschließt gleichzeitig den Hohlraum 12. Dies ist die normale Sitzposition.

Um in dem Hohlraum 12 Wertgegenstände, wie Arbeitsgeräte, sensible Daten, Schmuck etc., unterbringen zu können und auch bei Abwesenheit von dem Passagier zu schützen, ist das Schloss 6 vorgesehen. Mit Schloss 6 kann die Sitzfläche 3 fest mit der Unterbaukonstruktion 10 verbunden werden. Die Bedienung des Schlosses kann beispielsweise mittels eines Codes oder einer Karte erfolgen. Es ist denkbar zur Benutzung des Schlosses das Ticket des Passagiers zu verwenden.

Um die Bedienung des Hohlraums 12 zu erleichtern, ist die Beleuchtungseinrichtung 9 vorgesehen. Die Beleuchtung 9 kann als Dauerlicht vorgesehen sein oder als Beleuchtung, die sich beim Öffnen der Sitzfläche 3 automatisch einschaltet.

Die Unterseite der Sitzfläche 3 ist beispielsweise auch als Werbefläche nutzbar. Beim Verändern der Position der Sitzfläche 3 kann die Unterseite der Sitzfläche 3 betrachtet werden. Dort angebrachte Werbung wird dabei für einen Bediener sichtbar.

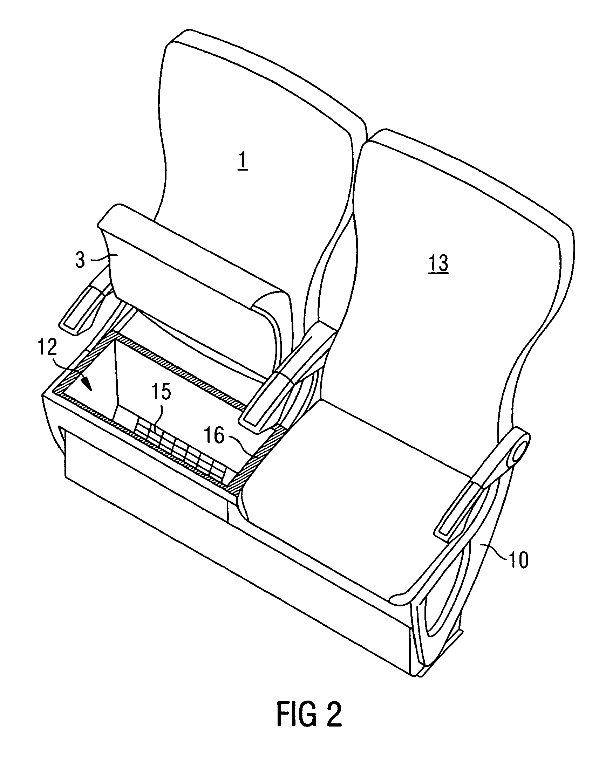

Fig. 2 zeigt eine weitere schematisierte dreidimensionale Double Seat Passagiersitzgruppe gemäß vorliegender Erfindung. In Fig. 2 ist ein erster Passagiersitz 1 und ein zweiter Passagiersitz 13 zu sehen, die zu einer Passagiersitzgruppe kombiniert sind. Die Sitze sind dabei nebeneinander angeordnet. In Fig. 2 ist der Hohlraum 12 zu sehen, der durch die Abtrennung 16 von einem Nachbarhohlraum abgetrennt ist. Somit kann der Hohlraum 12 mit der Sitzfläche 3 vollständig verschlossen werden.

Im Bodenbereich des Hohlraums 12 ist der perforierte Boden 15 zu sehen. Der perforierte Boden 15 bildet die Bodenfläche zu Hohlraum 12 und schließt Hohlraum 12 nach unten ab. Die perforierte Bodenfläche 15 ist mit der Unterbaukonstruktion 10 verbunden. Die perforierte Bodenfläche 15 besteht aus einer siebförmigen Struktur und umfasst mindestens ein Loch, so dass kleine Teile, beispielsweise Verunreinigungen, durch das zumindest eine Loch in der perforierten Bodenfläche 15 auf den Flugzeugboden fallen können. Von dem Flugzeugboden können die kleinen Teile bzw. Verunreinigungen leicht entfernt werden. Größere Objekte werden von der perforierten Bodenplatte jedoch am Herausfallen gehindert. Durch die perforierte Bodenplatte 15 ist ebenfalls eine Belüftung des Hohlraums 12 gewährleistet.

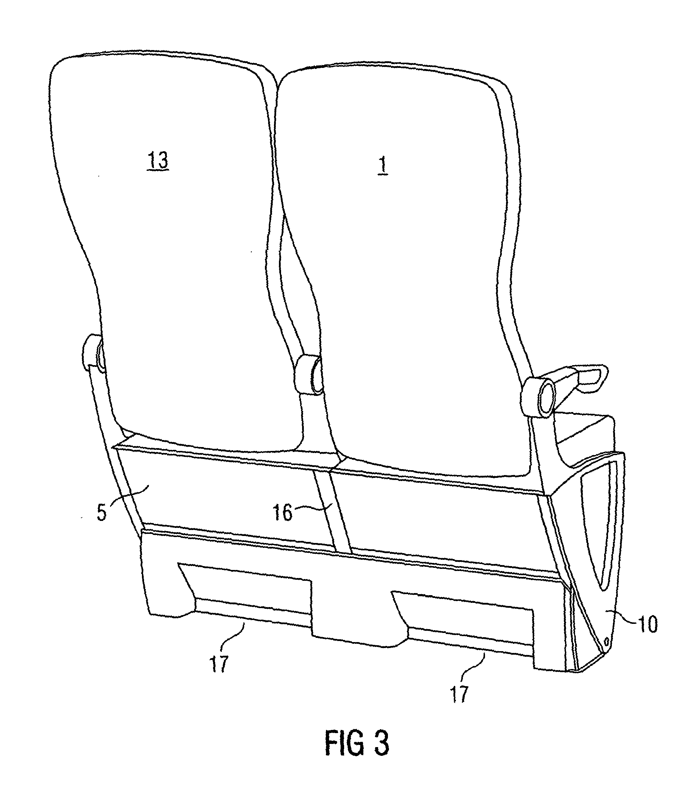

Fig. 3 zeigt eine schematisierte dreidimensionale Rückansicht einer Double Seat Passagiersitzgruppe gemäß der vorliegenden Erfindung. Fig. 3 zeigt den Passagiersitz 1 und Passagiersitz 13 in Double Seat Anordnung von hinten. Das Bild zeigt die rahmenförmige Unterbaukonstruktion 10, die einen Hohlraum 12 ausbildet. Der Hohlraum 12 ist von der undurchsichtigen Verkleidung 5 verdeckt. Die Hohlräume der Einzelpassagiersitze 1, 13 sind durch die Scheidewand 16 voneinander getrennt. In dem rückwärtigen Fußbereich der Double Seat Passagiersitzgruppe weist die Unterbaukonstruktion 10 Aussparungen 17 auf. Diese Aussparungen 17 geben einem rückwärtig sitzenden Passagier zusätzliche Freiheit für seine Beine.

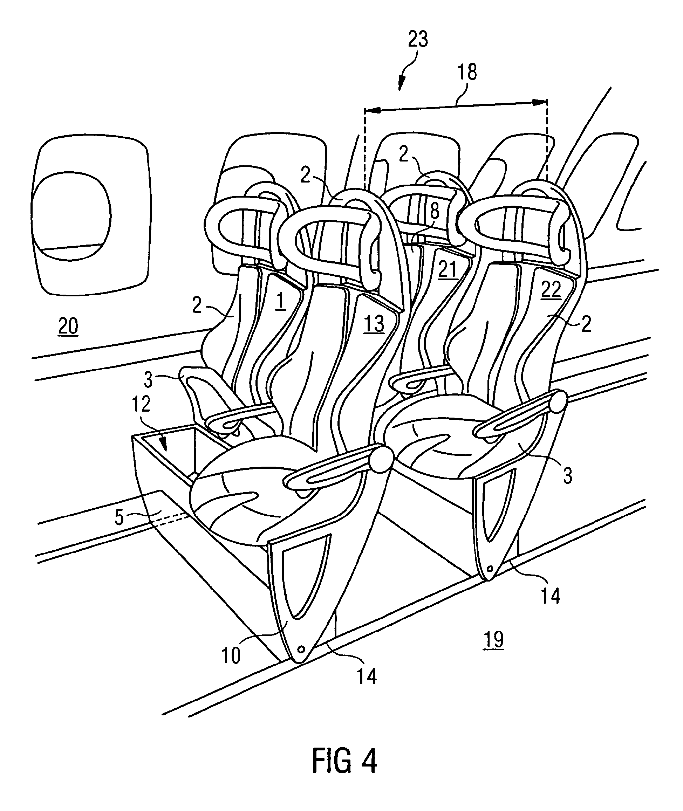

Fig. 4 zeigt eine erste Double Seat Sitzanordnung, umfassend die Einzelpassagiersitze 1 und 13 und eine zweite Passagiersitzgruppe, umfassend die Einzelpassagiersitze 21 und 22. Die Anordnung zeigt die erste und zweite Passagiersitzgruppe neben einer Fensterwand 20 eines Flugzeuges angeordnet. Die Fensterwand 20 begrenzt die Passagiersitzgruppen auf einer ersten Seite, der Flur 19 begrenzt die Passagiersitzgruppen auf einer zweiten Seite. Die Einzelpassagiersitze 1, 13, 21 und 22 weisen jeweils einen Hohlraum 12 auf. Der Hohlraum 12 ist von der undurchsichtigen Verkleidung 5 vor Einblicken geschützt. Die Sitzflächen 3 und Rückenlehnen 2 der Einzelpassagiersitze 1, 13, 21 und 22 sind auf der Unterbaukonstruktion 10 angebracht. Die Rückenlehnen 2 der Einzelpassagiersitze 1 und 13 weisen einen Abstand 18 von den Rückenlehnen 2 der Einzelpassagiersitze 21 und 22 auf.

Ein Sitzabstand stellt immer einen Kompromiss zwischen ökonomischen und ergonomischen Randebedingungen dar. D.h. unter ökonomischen Gesichtspunkten besteht meist das Interesse eine hohe Anzahl an Sitzreihen in der Flugzeugkabine unterzubringen, während unter ergonomischen Aspekten ein großer Abstand 18 für mehr Komfort, beispielsweise Beinfreiheit, wünschenswert ist. Ein üblicher Kompromiss sind heutzutage 787,4 mm. Dieser Abstand kann mit den in Fig. 4 dargestellten Sitzen eingehalten werden.

Größere oder kleinere Abstände 18 sind möglich. Um dabei zusätzliche Beinfreiheit für den rückwärtigen Passagier zu bieten, verjüngt sich die Unterbaukonstruktion 10 im Fußbereich 14. Betrachtet man einen Einzelpassagiersitz, z. B. Passagiersitz 13, so weist die Rückenlehne 2 eine erste Hinterseite auf. Die Unterbaukonstruktion 10 des Passagiersitzes 13 weist eine zweite Hinterseite auf, wobei die erste Hinterseite rückwärtig mit der zweiten Hinterseite abschließt. Im Fußbereich 14 ragt die erste Hinterseite der Rückenlehne 2 über die zweite Hinterseite der Unterbaukonstruktion 10 hinaus. Die zusätzliche Beinfreiheit ermöglicht ebenfalls einen leichteren Einstieg in die hintere Sitzreihe 21, 22 von dem Gang 19 aus. Der freie Deckenbereich 23 über den Einzelpassagiersitzen 1, 13, 21 und 22 erleichtert zudem den Einstieg in die Passagiersitze 1, 13, 21 und 22.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Passagiersitz für ein Flugzeug, aufweisend:
eine Unterbaukonstruktion (10);
eine Sitzfläche (3);
eine Rückenlehne (2);
wobei die Unterbaukonstruktion (10) einen ersten Hohlraum (12) aufweist;
wobei der erste Hohlraum (12) ausgestaltet ist, ein Objekt aufzunehmen;
wobei die Sitzfläche (3) auf der Unterbaukonstruktion (10) angeordnet ist;
wobei die Sitzfläche (3) in einen Betriebszustand bringbar ist, so dass der erste Hohlraum (12) zugänglich ist;
wobei eine Hinterseite der Rückenlehne (2) rückwärtig mit einer Hinterseite der Unterbaukonstruktion (10) abschließt oder über die Hinterseite der Unterbaukonstruktion (10) herausragt;
wobei die Hinterseite der Unterbaukonstruktion (10) eine Aussparung (17) aufweist und wobei sich die Unterbaukonstruktion (10) in einem Fußbodenbereich (14) verjüngt, um eine zusätzliche Beinfreiheit zu schaffen.

2. Passagiersitz nach Anspruch 1,
wobei die Unterbaukonstruktion (10) ausgebildet ist, die Last der Sitzfläche (3) aufzunehmen.

3. Passagiersitz nach einem der Ansprüche 1 oder 2,
wobei der erste Hohlraum (12) ausgebildet ist, ein Normgepäckstück aufzunehmen.

4. Passagiersitz nach einem der Ansprüche 1 bis 3,
wobei der Passagiersitz eine Verschlussvorrichtung (6) aufweist, mittels welcher der erste Hohlraum (12) verschließbar ist.

5. Passagiersitz nach einem der Ansprüche 1 bis 4,
wobei die Unterbaukonstruktion (10) als Rahmenkonstruktion ausgebildet ist.

6. Passagiersitz nach einem der Ansprüche 1 bis 5,
wobei die Unterbaukonstruktion (10) einen oberen Bereich und einen unteren Bereich aufweist;
wobei der obere Bereich einen größeren Abstand von einem Kabinenboden aufweist als der untere Bereich;
wobei sich die Unterbaukonstruktion (10) von dem oberen Bereich zu dem unteren Bereich verjüngt.

7. Passagiersitz nach einem der Ansprüche 1 bis 6,
wobei die Unterbaukonstruktion (10) zumindest teilweise mit einem transparenten Werkstoff hergestellt ist.

8. Passagiersitz nach einem der Ansprüche 1 bis 6,
wobei die Unterbaukonstruktion (10) zumindest teilweise aus einem undurchsichtigen Werkstoff hergestellt ist.

9. Passagiersitz nach einem der Ansprüche 1 bis 6,
wobei die Unterbaukonstruktion (10) zumindest teilweise aus einer offenen Netzstruktur hergestellt ist.

10. Passagiersitz nach einem der Ansprüche 1 bis 9,
wobei die Unterbaukonstruktion (10) eine mit zumindest einem Loch versehene Bodenfläche (15) aufweist.

11. Passagiersitz nach einem der Ansprüche 1 bis 10,
wobei die Unterbaukonstruktion (10) mindestens einen zweiten Hohlraum aufweist der von dem ersten Hohlraum abgetrennt ist.

12. Passagiersitz nach Anspruch 11,
wobei der zumindest eine zweite Hohlraum von einer rückwärtigen Position der Unterbaukonstruktion (10) zugänglich ist.

13. Passagiersitz nach einem der Ansprüche 1 bis 12,
mit einer Beleuchtungseinrichtung (9) zum Beleuchten des Hohlraumes (12).

14. Passagiersitz nach einem der Ansprüche 1 bis 13,
mit einer Körpermassagefunktionseinheit, die in dem ersten Hohlraum (12) ausgebildet ist.

15. Passagiersitz nach einem der Ansprüche 1 bis 14,
mit einer Beduftungsfunktionseinheit, die in dem ersten Hohlraum (12) ausgebildet ist.

16. Passagiersitz nach einem der Ansprüche 1 bis 15,
mit einer Beinstütze, die in dem ersten Hohlraum (12) ausgebildet ist.

17. Passagiersitz nach einem der Ansprüche 1 bis 16,
wobei die Sitzfläche (3) derart ausgestaltet ist, dass sie als Tischfläche nutzbar ist.

18. Passagiersitzgruppe, aufweisend eine Mehrzahl von Passagiersitzen nach einem der Ansprüche 1 bis 17.

19. Passagiersitzgruppe nach Anspruch 18,
wobei die Passagiersitzgruppe auf einer Sitzmontagevorrichtung montierbar ist.

20. Passagiersitzgruppe nach Anspruch 18 oder 19,
wobei die Mehrzahl von Passagiersitzen (1, 13, 21, 22) einen ersten (1, 13) und einen zweiten Passagiersitz (21, 22) aufweist;
wobei der zweite Passagiersitz (21, 22) hinter dem ersten Passagiersitz (1, 13) angeordnet ist.

21. Passagiersitzgruppe nach einem der Ansprüche 18 bis 20,
wobei die Mehrzahl von Passagiersitzen (1, 13, 21, 22) einen dritten (1, 21) und einen vierten (13, 22) Passagiersitz aufweist;
wobei der vierte Passagiersitz (13, 22) neben dem dritten Passagiersitz (1, 21) angeordnet ist.

22. Passagiersitzgruppe nach Anspruch 21,
wobei die Hohlräume von zumindest einem Teil der Mehrzahl von Passagiersitzen (1, 13, 21, 22) zum Bilden eines gemeinsamen Hohlraums verbunden sind.

23. Flugzeug mit einem Passagiersitz nach einem der Ansprüche 1 bis 17 oder einer Passagiersitzgruppe nach einem der Ansprüche 18 bis 22.

## Claims

1. Passenger seat for an aircraft, comprising:
a substructure (10);
a seat surface (3);
a seatback (2);
wherein the substructure (10) has a first hollow space (12);
wherein the first hollow space (12) is designed to accommodate an object;
wherein the seat surface (3) is arranged on the substructure (10);
wherein the seat surface (3) can be brought into an operating position in which the hollow space (12) is accessible;
wherein the rear side of the seatback (2) terminates rearwards with the rear side of the substructure (1) or projects over the rear side of the substructure (10);
wherein the rear side of the substructure (10) has a recess (17) and wherein the substructure (10) tapers in a floor area (14) in order to provide more legroom.

2. Passenger seat according to claim 1,
wherein the substructure (10) is designed to absorb the load of the seat surface (3).

3. Passenger seat according to either claim 1 or claim 2,
wherein the first hollow space (12) is designed to accommodate a standard item of luggage.

4. Passenger seat according to any one of claims 1 to 3,
wherein the passenger seat has a locking device (6) by means of which the first hollow space (12) is lockable.

5. Passenger seat according to any one of claims 1 to 4,
wherein the substructure (10) is designed as a frame construction.

6. Passenger seat according to any one of claims 1 to 5,
wherein the substructure (10) has an upper area and a lower area;
wherein the upper area is located a further distance from a cabin floor than the lower area;
wherein the substructure (10) tapers from the upper area to the lower area.

7. Passenger seat according to any one of claims 1 to 6,
wherein the substructure (10) is manufactured at least partially from a transparent material.

8. Passenger seat according to any one of claims 1 to 6,
wherein the substructure (10) is manufactured at least partially out of an opaque material.

9. Passenger seat according to any one of claims 1 to 6,
wherein the substructure (10) is manufactured at least partially out of an open network structure.

10. Passenger seat according to any one of claims 1 to 9,
wherein the substructure (10) has a floor (15) provided with at least one hole.

11. Passenger seat according to any one of claims 1 to 10,
wherein the substructure (10) has at least a second hollow space which is separated from the first hollow space.

12. Passenger seat according to any one of claims 11,
wherein the at least second hollow space is accessible from a rearward position of the substructure (10).

13. Passenger seat according to any one of claims 1 to 12,
with a lighting device (9) for illuminating the hollow space (12).

14. Passenger seat according to any one of claims 1 to 13,
with a body massage unit formed in the first hollow space (12).

15. Passenger seat according to any one of claims 1 to 14,
with an air freshening unit formed in the first hollow space (12).

16. Passenger seat according to any one of claims 1 to 15,
with a leg rest formed in the first hollow space (12).

17. Passenger seat according to any one of claims 1 to 16,
wherein the seat surface (3) is designed so as to be usable as a table surface.

18. Passenger seat group having a plurality of passenger seats according to any one of claims 1 to 17.

19. Passenger seat group according to claim 18 or claim 19,
wherein the passenger seat group is mountable on a seat assembly device.

20. Passenger seat group according to any one of claims 18 or 19,
wherein the plurality of passenger seats (1, 13, 21, 22) has a first (1, 13) and a second passenger seat (21, 22);
wherein the second passenger seat (21, 22) is arranged behind the first passenger seat (1, 13).

21. Passenger seat group according to any one of claims 18 to 20,
wherein the plurality of passenger seats (1, 13, 21, 22) has a third (1, 21) and a fourth (13, 22) passenger seat,
wherein the fourth passenger seat (13, 22) is arranged next to the third passenger seat (1, 21).

22. Passenger seat group according to claim 21,
wherein the hollow spaces of at least some of the plurality of passenger seats (1, 13, 21, 22) are connected to form a common hollow space.

23. Aircraft with a passenger seat according to any one of claims 1 to 17 or a passenger seat group according to any one of claims 18 to 22.

## Revendications

1. Siège pour passager pour un avion, comportant :
une structure sous siège (10) ;
une assise (3) ;
un dossier (2) ;
dans lequel la structure sous siège (10) comporte un premier compartiment creux (12) ;
dans lequel le compartiment creux (12) est conçu pour recevoir un objet ;
dans lequel l'assise (3) est agencée sur la structure sous siège (10) ;
dans lequel l'assise (3) peut être amenée dans un état de service tel, que le premier compartiment creux (12) est accessible ;
dans lequel un côté arrière du dossier (2) est aligné à l'arrière avec un côté arrière de la structure sous siège (10) ou bien fait saillie par rapport au côté arrière de la structure sous siège (10) ;
dans lequel le côté arrière de la structure sous siège (10) comporte un évidement (17) et dans lequel la structure sous siège (10) s'amincit dans une zone de plancher (14) pour créer de l'espace supplémentaire pour les jambes.

2. Siège pour passager selon la revendication 1,
dans lequel la structure sous siège (10) est conçue pour recevoir la charge de l'assise (3).

3. Siège pour passager selon l'une des revendications 1 ou 2,
dans lequel le premier compartiment creux (12) est conçu pour recevoir un bagage normalisé.

4. Siège pour passager selon l'une des revendications 1 à 3,
dans lequel le siège pour passager comporte un dispositif de verrouillage (6) au moyen duquel le premier compartiment creux (12) peut être verrouillé.

5. Siège pour passager selon l'une des revendications 1 à 4,
dans lequel la structure sous siège (10) est conçue sous forme de châssis.

6. Siège pour passager selon l'une des revendications 1 à 5,
dans lequel la structure sous siège (10) comporte une zone supérieure et une zone inférieure ;
dans lequel la zone supérieure se situe à une distance plus importante du plancher de la cabine que la zone inférieure ;
dans lequel la structure sous siège (10) s'amincit de la zone supérieure vers la zone inférieure.

7. Siège pour passager selon l'une des revendications 1 à 6,
dans lequel la structure sous siège (10) est fabriquée au moins partiellement dans un matériau transparent.

8. Siège pour passager selon l'une des revendications 1 à 6,
dans lequel la structure sous siège (10) est fabriquée au moins partiellement dans un matériau opaque.

9. Siège pour passager selon l'une des revendications 1 à 6,
dans lequel la structure sous siège (10) est constituée au moins partiellement d'une structure réticulaire formant filet.

10. Siège pour passager selon l'une des revendications 1 à 9,
dans lequel la structure sous siège (10) comporte une surface de fond (15) comportant au moins un trou.

11. Siège pour passager selon l'une des revendications 1 à 10,
dans lequel la structure sous siège (10) comporte au moins un second compartiment creux qui est séparé du premier compartiment creux.

12. Siège pour passager selon la revendication 11,
dans lequel au moins un second compartiment creux est accessible à partir d'une position arrière de la structure sous siège (10).

13. Siège pour passager selon l'une des revendications 1 à 12,
comportant un dispositif d'éclairage (9) pour éclairer le compartiment creux (12).

14. Siège pour passager selon l'une des revendications 1 à 13,
comportant une unité fonctionnelle de massage corporel qui est réalisée dans le premier compartiment creux (12).

15. Siège pour passager selon l'une des revendications 1 à 14,
comportant une unité fonctionnelle de diffusion de parfum qui est réalisée dans le premier compartiment creux (12).

16. Siège pour passager selon l'une des revendications 1 à 15,
comportant un repose-pied qui est réalisé dans le premier compartiment creux (12).

17. Siège pour passager selon l'une des revendications 1 à 16,
dans lequel l'assise (3) est conçue de telle façon qu'elle peut être utilisée comme tablette.

18. Groupe de sièges pour passager comptant une pluralité de sièges pour passager selon l'une des revendications 1 à 17.

19. Groupe de sièges pour passager selon la revendication 18,
dans lequel le groupe de sièges pour passager peut être monté sur un dispositif de montage de sièges.

20. Groupe de sièges pour passager selon la revendication 18 ou 19,
dans lequel la pluralité de sièges pour passagers (1, 13, 21, 22) comporte un premier (1, 13) et un second (21, 22) sièges pour passager ;
dans lequel le second siège pour passager (21, 22) est disposé derrière le premier siège pour passager (1, 13).

21. Groupe de sièges pour passager selon l'une des revendications 18 à 20,
dans lequel la pluralité de sièges pour passager (1, 13, 21, 22) comporte un troisième (1, 21) et un quatrième (13, 22) sièges pour passager ;
dans lequel le quatrième siège pour passager (13, 22) est disposé derrière le troisième siège pour passager (1, 21).

22. Groupe de sièges pour passager selon la revendication 21,
dans lequel les compartiments creux d'au moins une partie de la pluralité des sièges pour passager (1, 13, 21, 22) sont reliés pour former un compartiment creux commun.

23. Avion comportant un siège pour passager selon l'une des revendications 1 à 17 ou un groupe de sièges pour passager selon l'une des revendications 18 à 22.
